**Europäisches Patentamt**

**European Patent Office**

**Office européen des brevets**

(11) Veröffentlichungsnummer: **0 346 636 B1**

(12) **EUROPÄISCHE PATENTSCHRIFT**

(45) Veröffentlichungstag der Patentschrift: **13.07.94**

(51) Int. Cl.5: **H04N 7/137**

(21) Anmeldenummer: **89108914.6**

(22) Anmeldetag: **18.05.89**

(54) **Verfahren zur Aufbereitung und Übertragung einer Bildsequenz.**

(30) Priorität: **13.06.88 DE 3820039**

(43) Veröffentlichungstag der Anmeldung:
**20.12.89 Patentblatt 89/51**

(45) Bekanntmachung des Hinweises auf die
Patenterteilung:
**13.07.94 Patentblatt 94/28**

(84) Benannte Vertragsstaaten:
**DE FR GB IT NL**

(56) Entgegenhaltungen:
US-A- 4 689 673
US-A- 4 700 226
US-A- 4 733 298

SIGNAL PROCESSING OF HDTV - PROCEE-
DINGS OF THE SECOND INTERNATIONAL
WORKSHOP ON SIGNAL PROCESSING OF
HDTV, L'Aquila, 29. Februar - 2. März 1988,
Seiten 1-11, Elsevier, Amsterdam, NL; H. YA-
SUDA: "A draft ISO standard for coded representation of still pictures"

SIGNAL PROCESSING OF HDTV - PROCEE-
DINGS OF THE SECOND INTERNATIONAL
WORKSHOP ON SIGNAL PROCESSING OF
HDTV, L'Aquila, 29. Februar - 2. März 1988,

Seiten 303-308, Elsevier, Amsterdam, NL; L.
CONTIN et al.: "Very low bitrate coding of
HDTV signals"

"A Variable Resolution Video Codec for Low
Bit-Rate Applications", IEEE Vol. SAC-5, No.
7, Seiten 1184-1189, New York, August 1987

(73) Patentinhaber: **ANT Nachrichtentechnik GmbH**
**Gerberstrasse 33**
**D-71522 Backnang(DE)**

(72) Erfinder: **Grotz, Karlheinz, Dipl.-Ing.**
**Wilhelmstrasse 25**
**D-7012 Fellbach(DE)**
Erfinder: **Mayer, Jörg, Dipl.-Ing.**
**Obere Waiblinger Strasse 120**
**D-7000 Stuttgart 50(DE)**
Erfinder: **Süssmeier, Georg, Dipl.-Ing**
**Hohenheimer Strasse 19**
**D-7150 Backnang(DE)**

Anmerkung: Innerhalb von neun Monaten nach der Bekanntmachung des Hinweises auf die Erteilung des
europäischen Patents kann jedermann beim Europäischen Patentamt gegen das erteilte europäische Patent
Einspruch einlegen. Der Einspruch ist schriftlich einzureichen und zu begründen. Er gilt erst als eingelegt, wenn
die Einspruchsgebühr entrichtet worden ist (Art. 99(1) Europäisches Patentübereinkommen).

EP 0 346 636 B1

**Beschreibung**

Die Erfindung betrifft ein Verfahren zur senderseitigen Aufbereitung einer Bildsequenz für die Ubertragung über einen Kanal mit begrenzter Datenkapazität und deren empfangsseitige Rekonstruktion.

Für Bildinformationen, die über einen Übertragungskanal mit begrenzter Datenkapazität übertragen werden sollen, gibt es zahlreiche Verfahren zur Redundanz- und Irrelevanzverminderung. In Esprit '86 Results and Achievements, Commission of the European Communities, Directorate General XIII, 1987, North-Holland, Seiten 413 bis 422, werden einige solcher Verfahren vorgeschlagen. Beim DPCM (Differential Pulse Code Modulation)-Verfahren wird anstelle aktueller Abtastwerte die Differenz zwischen dem aktuellen Wert und einem Prädiktionswert übertragen. Die Datenkompression wird durch Quantisierung erreicht. Bei der adaptiven DPCM wird anhand eines Bewegungskriteriums die Prädiktion und der Quantisierungsgrad gesteuert. Beim ABTC (Adaptive Block Truncation Coding)-Verfahren wird die Codierung je nach Bewegungsanteil von Bildbereichen in 3 Moden gesteuert. Das HPC (Hierarchical Predictive Coding)-Verfahren basiert auf der Kombination von Prädiktionscodierung und Interpolation. Bei der Transformationscodierung, z.B. der ADCT (Adaptive Cosine Transform)-Codierung werden die örtlichen Abtastwerte eines Bildblocks mittels einer mathematischen Vereinbarung transformiert zur Gewinnung von entkorrelierten Koeffizienten. Die Datenkompression wird durch Abschneiden vom Koeffizienten und nichtlinearer Quantisierung erreicht. Bei der Vektorquantisierung wird das Bild in eine große Zahl kleiner Zellen unterteilt, z.B. 2x2 oder 4x4 Bildelemente. Jede Zelle von k Bildelementen wird dann als Faktor im k dimensionalen Raum aufgefaßt. Eine Anzahl von repräsentativen Vektoren wird für die Übertragung ausgewählt. Für die Codierung werden die aktuellen Bildvektoren durch die repräsentativen Vektoren in ihrer Nachbarschaft beschrieben.

Aus der DE-C-37 04 777 ist es bekannt, die Bewegungsvektoren für Teilbildbereiche zu ermitteln und diese zu codieren. Bei stark bewegten Bereichen werden bildpunktabhängige Informationen für diese Teilbildbereiche übertragen.

Aus SPIE (International Society for Optical Engineering), Seiten 119 bis 128, ist es bekannt, für ein ganzes sich bewegendes Objekt Verschiebungsvektoren zu ermitteln und zu übertragen. Prädiktionsfehler werden blockweise codiert, beispielsweise mittels einer DCT (discrete cosine transform)Transformation und übertragen. Ausgelassene Zwischenbilder werden empfangsseitig bewegungsadaptiv interpoliert.

Aus "A Variable Resolution Video Codec for Low Bit-Rate Applications", IEEE Journal on Selected Areas in Communications, Vol. SAC-5, No. 7, Seiten 1184 bis 1189, New York, August 1987 ist es bekannt, Bildbereiche für die Übertragung über einen Kanal mit begrenzter Übertragungskapazität in Abhängigkeit des Änderungsgrades unterabzutasten.

Aus US-A-4,700,226 ist ebenfalls eine Methode zur Steuerung der Auflösung von Teilbildbereichen bekannt. Die Auflösungssteuerung erfolgt dort in Abhängigkeit des Füllstandes eines vor dem Übertragungskanal vorgesehenen Pufferspeichers (backward control).

Die US-A-4,689,673 beschreibt einen bewegungskompensierten Prädiktions-Enkoder. Ein Bildanalysator erzeugt Steuersignale, wenn die Summe von Bildpunktdifferenzen einen vorgegebenen Schwellwert übersteigen. Auf diese Weise können Szenenwechsel eines Bildes erkannt werden.

Aufgabe der Erfindung ist es, ein Verfahren zur sendeseitigen Aufbereitung einer Bildsequenz anzugeben, welches einen schnellen Bildaufbau gestattet und eine gute empfangsseitige Bildrekonstruktion ermöglicht. Diese Aufgabe wird durch die Merkmale des Patentanspruchs gelöst.

Die Erfindung weist folgende Vorteile auf:

Es wird eine hohe Bildqualität bei schnellem Bildaufbau erreicht. Die wichtigsten Bilddetails (Strukturen mit hoher Bildaktivität) erscheinen sofort. Feinstrukturen werden in Sekundenbruchteilen ergänzt.

Durch eine bewegungskompensierte empfängerseitige Bildextra-(-inter)-polation wird eine ruckartige Bilddarstellung vermieden. Der Übertragungskanal wird optimal ausgenutzt. Im Gegensatz zur Realisierung gemäß SPIE, Seiten 119 bis 128, wo ein ganzes Objekt durch einen Verschiebungsvektor beschrieben wird und demnach in den Randbereichen dieses Objekts ein großer Unsicherheitsbereich entsteht, der nur durch Ubertragung von Prädiktionsfehlern im gesamten Unsicherheitsbereich klein gehalten werden kann, muß beim Verfahren nach der Erfindung nur bei ganz wenigen Teilbildbereichen/Blöcken Originalbildinhalt bzw. Prädiktionsfehler übertragen werden. Durch die Auswahl der zu übertragenden transformierten Teilbildbereiche/Blöcke anhand der Differenzen (Fehler) zu vorhergehenden Teilbildbereichen /Blöcken läßt sich bereits mit wenig Übertragungsdaten ein bezüglich eines Bewegungsablaufes sicheres Bild rekonstruieren. Das Verfahren nach der Erfindung bzw. ein danach ausgeführter Codec erlaubt folgende Betriebsarten:

- Übertragung der Kopf-Schulterdarstellung einer Person mit einer zeitlichen Auflösung von 25 (30) Bildern pro Sekunde,
- Ubertragung von Standbildern mit hoher Ortsauflösung und daraus abgeleitet:

- Standbild mit eingefrorenem Bewegtbild,
- Standbild mit eingeblendetem Bewegtbild.

Anhand der Zeichnungen wird ein Ausführungsbeispiel der Erfindung nun näher erläutert. Es zeigen:

Fig. 1    ein Blockschaltbild für ein Bildtelefon über ISDN, bei welchem das Verfahren nach der Erfindung eingesetzt wird,

Fig. 2    das Prinzip der bewegungskompensierten Prädiktion,

Fig. 3    das Prinzip der blockorientierten Bildextrapolation,

Fig. 4    ein Video-Coder mit Codierung der Quellbildsequenz,

Fig. 5    ein Video-Coder mit Codierung des Prädiktionsfehlers,

Fig. 6    eine Bitmaske zur Adressierung der Verschiebungsvektoren,

Fig. 7    eine Kennlinie zur Dämpfung kleiner Differenzen,

Fig. 8    eine Sortiertabelle für die DFD,

Fig. 9    ein Video-Decoder,

Fig. 10    einen Datenrahmen für die Übertragung,

Fig. 11    die Vektor- und DCT-Maske bei einer Bildvorlage mit Bewegungsanteil,

Fig. 12    eine Übersicht über die DCT-Codierung,

Fig. 13    die DCT-Klassifikation.

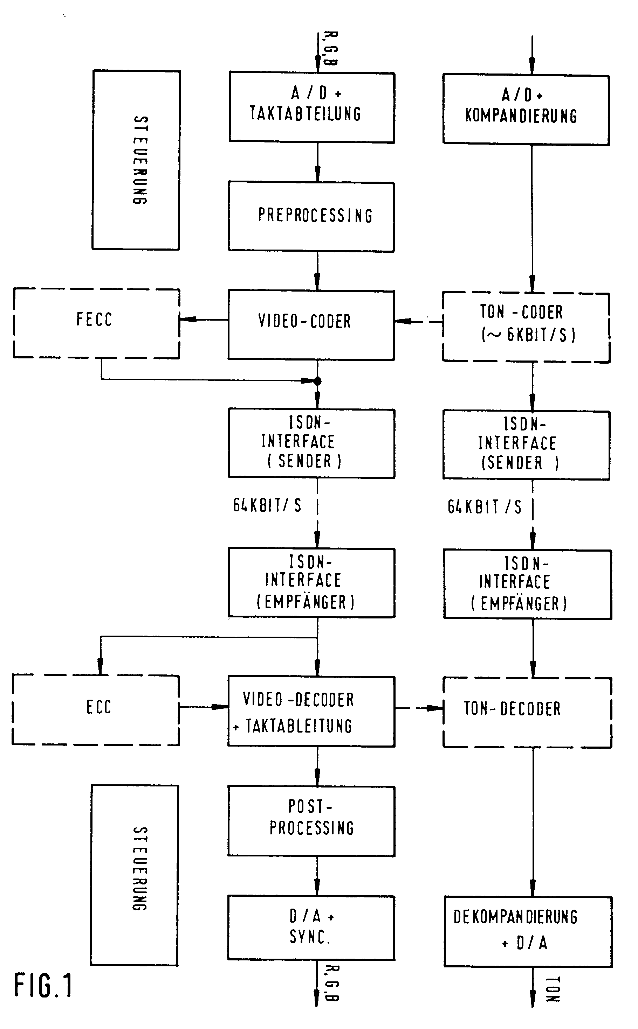

Das Bildtelefon nach Fig. 1 besteht aus getrennten Codern und Decodern für die Bild- und Tonübertragung. Damit ist z.B. eine Übertragung über 2 B-Kanäle in einem ISDN-Netz möglich. Eine Übertragung von Bild und Ton über einen B-Kanal ist nach geeigneter Quellcodierung des Tones ebenfalls möglich, ohne daß sich am Prinzip der Bildcodierung etwas ändert. Die Eingangsbildsequenz R,G,B wird z.B. nach der digitalen Fernsehnorm CCIR 601 abgetastet (A/D-Wandlung und Taktableitung). Die Toninformation wird ebenfalls A/D gewandelt und einer Kompandierung unterworfen. Die Digitalabtastung erfolgt gemäß CCIR 601 folgendermaßen:

| | |
|---|---|
| Luminanz (Y) -Abtastfrequenz: | 13,5 MHz 8 Bit linear |
| Chrominanz (U/V) - Abtastfrequenz: | 6,75 MHz 8 Bit linear |
| Bits/Pixel (Farbe): | 16 |
| Aktiver Bildinhalt: | 720*576 Pixel |
| Bildwechsel: | 50 (60) Halbbilder/s |
| 864 * 625 * 25 * 16 → 216 MBit/s | |

Die hohe Qualität dieser Abtastung erlaubt die Speicherung hochauflösender Standbilder, wie sie für die vorgenannte zweite Betriebsart vorgesehen ist.

Zur Anpassung dieser Quellbildsequenz an den nachfolgenden Video-Coder wird diese folgendermaßen vorbehandelt (Preprocessing):

Halbieren der Auflösung des Bildes in horizontaler und vertikaler Richtung.

Reduktion der Chrominanzauflösung in vertikaler Richtung auf 1/2.

Nutzung der Austastlücke zur Übertragung.

Somit 352 * 288 aktive Bildpunkte; 25 Hz Bildwechsel.

| | |
|---|---|
| Y Abtastfrequenz: | 6,75 MHz 8 Bit linear |
| U/V Abtastfrequenz: | 3,375 MHz 8 Bit linear |
| Bits/Pixel: | 12 |
| Bildwechsel: | 25 (30) Hz ohne Zeilensprung |
| Datenrate: | 30,41 (36,49) MBit/s |
| Reduktion: | Faktor 7 |

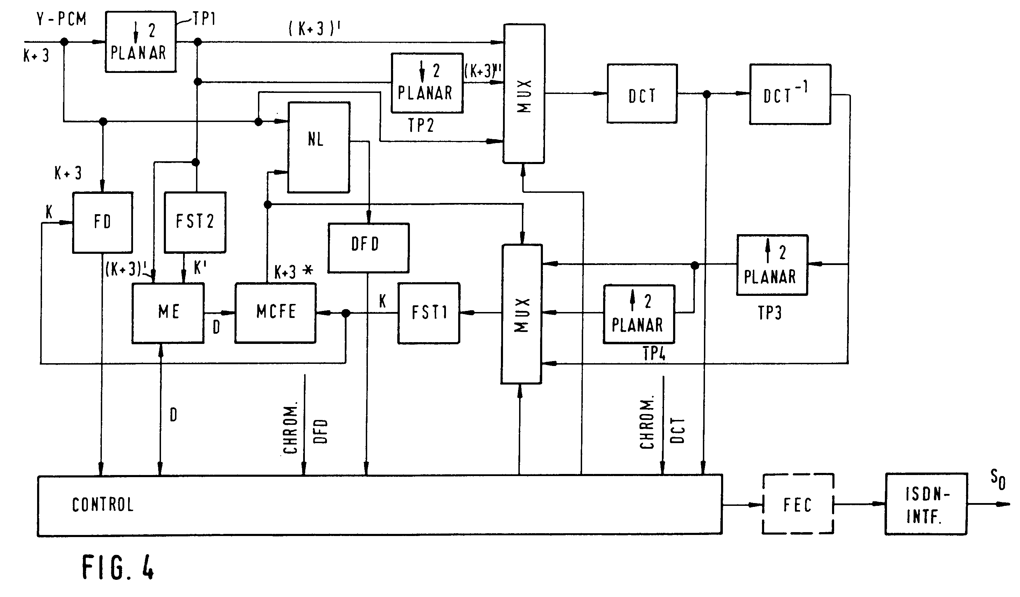

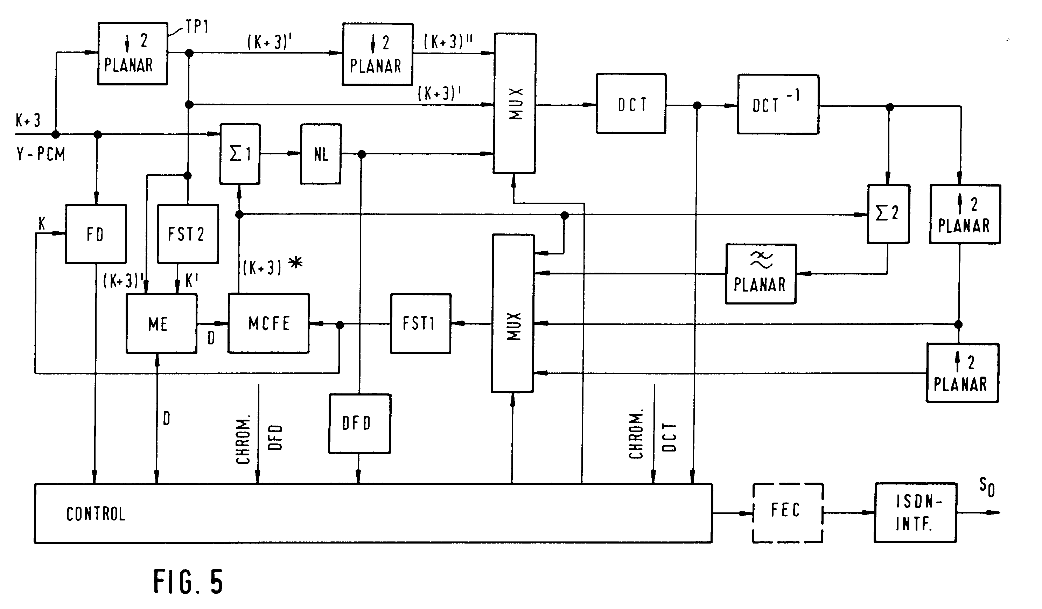

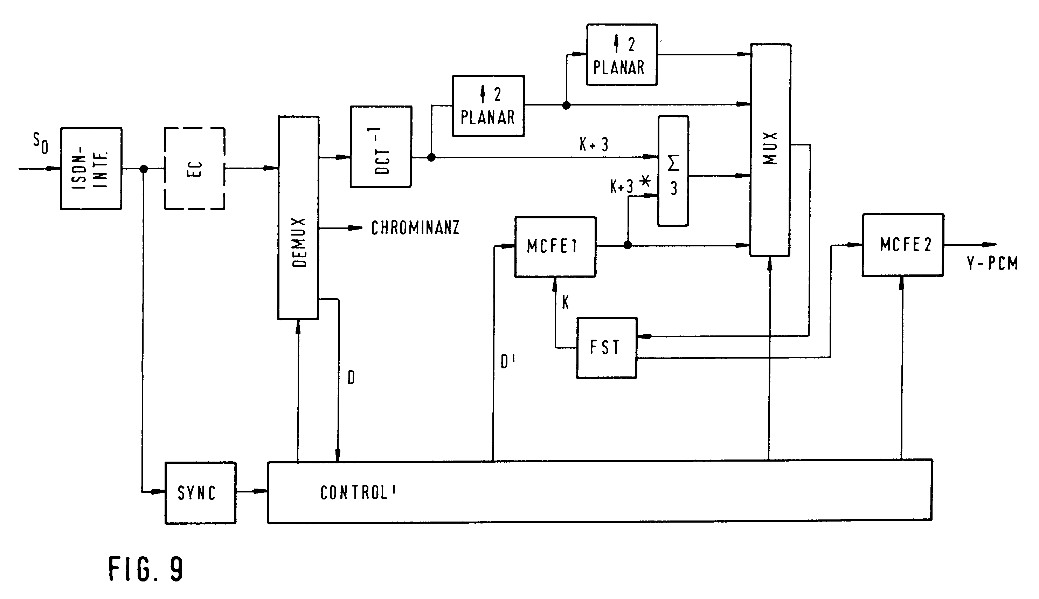

Diese Maßnahme reduziert die Quelldatenrate von 216 Mbit/s auf 30.41 (36.49) MBit/s. Die weitere Reduzierung geschieht im Video-Coder, der in Fig. 4 bzw. Fig. 5 dargestellt ist. Mit sender- und empfängerseitigen ISDN-Interface Schaltungen wird die Übertragung auf 64 kBit/s ISDN-Kanälen ermöglicht. Empfängerseitig erfolgt eine zur senderseitigen Aufbereitung entsprechende Decodierung. Die Figur 9 zeigt den entsprechenden Video-Decoder. Eine Signalnachverarbeitung (Post-Processing) stellt wieder ein gemäß CCIR 601 normgerechtes Bildformat her, welches nach D/A-Wandlung und Hinzufügung von Synchroninformation zur Wiedergabe auf einem RGB-Monitor geeignet ist. Die Schaltungsblöcke FECC (Forward Error Correction Control) und ECC (Error Correction Control) sind Einheiten zur bedarfsweisen

EP 0 346 636 B1

Fehlerkorrektur. Übertragungsfehler können damit erkannt und soweit möglich korrigiert werden.

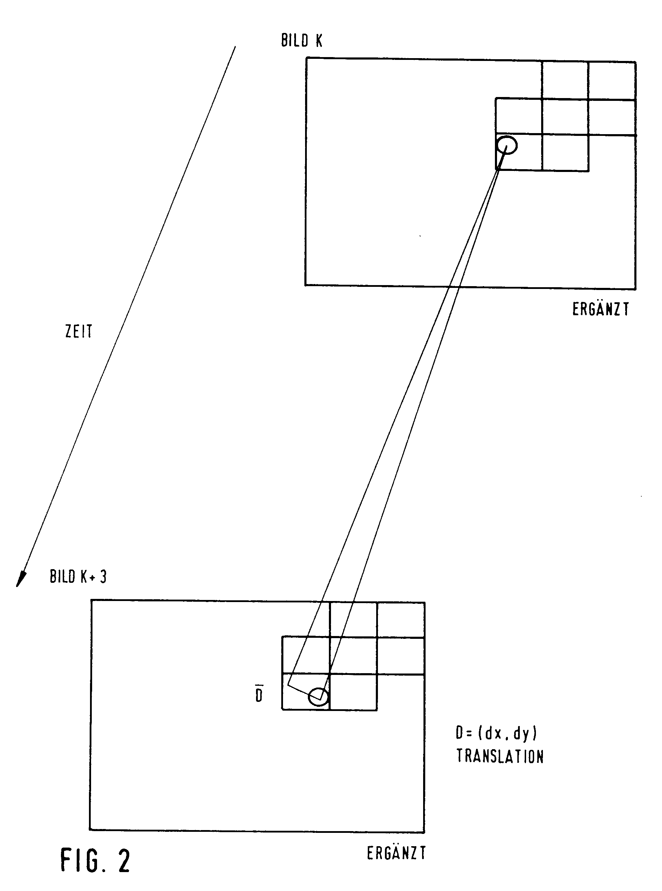

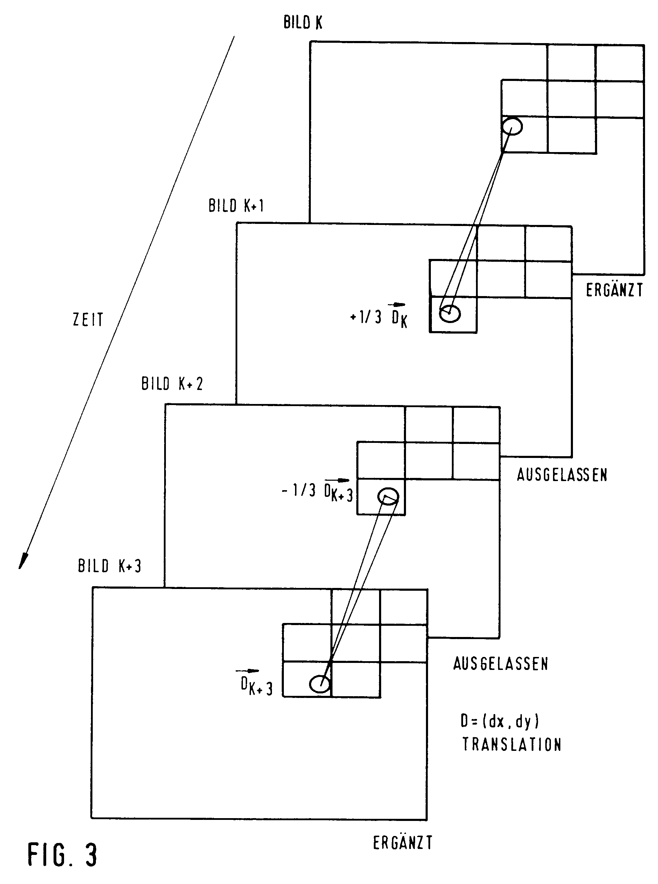

Die Grundidee des Codecs wird nun anhand der Figuren 2 und 3 erläutert. Sie besteht darin, nach dem Bildaufbau nur jedes 3. Bild (Fig. 2) zu codieren. Hierzu wird von dem Bild K+3 im Coder ein bewegungskompensiertes Schätzbild K+3* aus Bild K gebildet. Die Vektoren, mit denen K+3* gebildet wird, werden übertragen, so daß der Decoder das gleiche Schätzbild erzeugen kann. Es werden dann die Pixel zu Pixel Differenzen DFD zwischen dem Schätzbild K+3* und dem neuen Bild K+3 blockweise addiert (DFD = Displaced Frame Difference). Die DFD innerhalb eines Blocks/Teilbildbereichs von 8*8 Pixel ergibt sich zu

$$DFD = \Sigma\Sigma|p_{K+3*}(x,y) - p_{K+3}(x,y)|$$

mit Blockkoordinaten: x = 1,8 y = 1,8
und Pixelintensität p.

Für die Teilbildbereiche/Blöcke mit großen Summen, die Stellen mit großen Abweichungen kennzeichnen, wird entweder der Originalbildinhalt (Fig. 4) oder das Differenzbild (Fig. 5) mit einer wahrnehmungsadaptiven DCT (Discrete Cosine Transform) codiert. Im Empfänger wird die inverse DCT gebildet und in das bewegungskompensierte Schätzbild eingesetzt. Die fehlenden Zwischenbilder werden mit den übertragenen Verschiebungsvektoren D bewegungskompensiert extrapoliert oder interpoliert, so daß wieder ein weicher Bewegungsablauf entsteht (Fig. 3). Wie aus Fig. 3 ersichtlich ist, wird das Bild K+1 aus dem Bild K extrapoliert (Verschiebungsvektor + 1/3 $D_K$) und das Bild K+2 aus dem Bild K+3 (Verschiebungsvektor - 1/3 $D_{K+3}$).

Um einen schnellen Bildaufbau am Anfang der Verbindung zu gewährleisten, wird zuerst ein um den Faktor 4 planar tiefpassgefiltertes erstes Bild übertragen. Danach wird der Bildinhalt ergänzt, der um den Faktor 2 planar tiefpassgefiltert ist. Schließlich wird ungefilterter Bildinhalt ergänzt. Das Maß zur Steuerung dieser drei Betriebsarten wird aus der mittleren DFD - MDFD - gewonnen. Das Verfahren garantiert, daß der Bildinhalt auch bei großen Änderungen konsistent bleibt. D.h. ein willkürliches "Einfrieren" von Bildinhalten bei großen Änderungen wird vermieden. Zur Ermittlung dieser mittleren DFD werden die Bildpunkt-zu-Bildpunkt-Differenzen aller Blöcke zu je 8*8 Pixel herangezogen. Es ergibt sich demnach:

$$MDFD = \Sigma\Sigma \ DFD\ (i,j)$$
i = 1,44
j = 1,36

Die Funktion des Video-Coders wird am Beispiel der Luminanzbildverarbeitung (Fig. 4 und Fig. 5) beschrieben, da in der Chrominanzbildverarbeitung Ergebnisse aus dem Luminanzzweig übernommen werden. Beim Video-Coder nach Fig. 4 wird die Quellbildsequenz DCT transformiert, wohingegen beim Video-Coder nach Fig. 5 ein Differenzbild DCT transformiert wird. Da der Aufbau dieser beiden Video-Coder-Versionen sehr ähnlich ist, wird nur eine Ausführungsform ausführlich erläutert und für die andere nur die davon abweichende Realisierung beschrieben.

Jedes dem Eingang des Video-Coders als Y-PCM Signal zugeführte neue Bild K+3 wird mehrfach weiterverarbeitet:

a) Das Bild K+3 wird in der Stufe TP1 um den Faktor 2 planar tiefpassgefiltert und die Abtastfrequenz halbiert. Am Ausgang erscheint ein Bild (K+3)′. Dieser, in der Ortsauflösung reduzierte Bildinhalt, wird verwendet, wenn die mittlere DFD einen Grenzwert TH2 überschreitet (Spatiales Subsampling bei großen Änderungen). Die Verkleinerung wird im Decoder und für die Prädiktion durch Interpolation wieder aufgehoben (Stufe TP3).

b) Das Bild K+3′ wird in der Stufe TP2 noch einmal um den Faktor 2 planar tiefpassgefiltert und die Abtastfrequenz halbiert. Am Ausgang der Stufe TP2 erscheint das Bild (K+3)″. Dieses Bild wird im Falle des Verbindungsaufbaus oder eines Schnitts verwendet und vollständig mit Hilfe der DCT übertragen. Als Kriterium hierfür wird ebenfalls die mittlere DFD (wie in a), jedoch mit einer Schwelle TH4 > TH2 herangezogen. Damit erhält man einen schnellen Bildaufbau. Die Verkleinerung wird im Decoder und für die Prädiktion durch Interpolation wieder aufgehoben (Stufen TP3 und TP4).

c) Mit Hilfe des in einem Bildspeicher FST2 gespeicherten Bildes K′ und dem Bild K+3′ wird im Bewegungsvektorschätzer ME ein Satz von Verschiebungsvektoren D ermittelt. Ein Vektor gilt für einen Bereich von 16*16 Pixel.

d) Das Bild K+3 wird mit dem im Bildspeicher FST1 gespeicherten Bild K verglichen. Das Bild K wird durch eine inverse DCT-Transformation $DCT^{-1}$ und gegebenenfalls Aufhebung der Tiefpassfilterung (Stufen TP3, TP4) erstellt. Mit Hilfe der Frame-Differenz-Stufe FD werden dabei blockweise geänderte

4

Bildbereiche von ungeänderten unterschieden. Die Bildung der Frame-Differenz geschieht nach der Beziehung:

$$FD = \Sigma\Sigma|p_K(x,y) - p_{K+3}(x,y)|$$
$$x = 1,8$$
$$y = 1,8$$

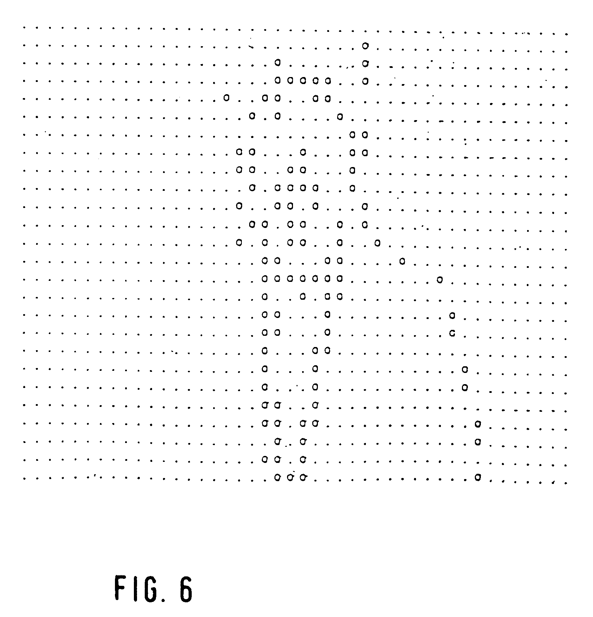

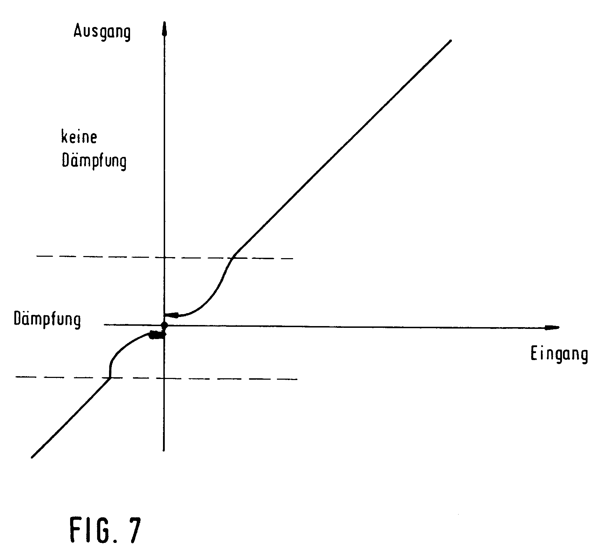

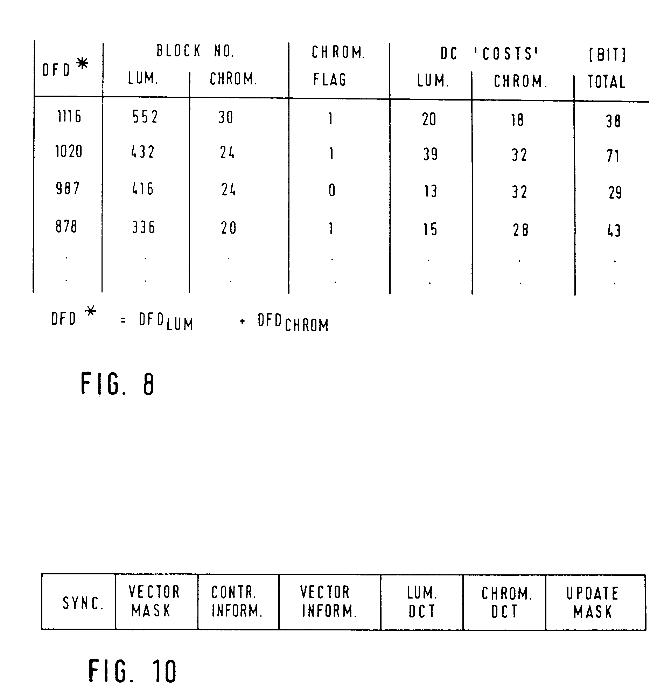

Für die geänderten Bildbereiche werden Verschiebungsvektoren D zur Bewegungskompensation zum Decoder übertragen. Im Coder und Decoder wird damit im Extrapolator zur Bewegungskompensation MCFE (Motion Compensated Frame Interpolator) ein bewegungskompensiertes Schätzbild K + 3* aus Bild K gebildet. Die Adressierung der Verschiebungsvektoren geschieht mit einer Bitmaske (Fig. 6), die VWL (Variable word length) codiert wird. Die Verschiebungsvektoren werden als Differenzen zum jeweils vorhergehenden Wert statistisch codiert, wobei pro Bild nur der erste Verschiebungsvektor als Absolutwert übertragen wird. Im Noise Limiter NL wird die Differenz zwischen dem neuen Bild K + 3 und dem Schätzbild K + 3* bildpunktweise gebildet. Diese wird einer nichtlinearen Kennlinie (Fig. 7) unterworfen, die kleine Differenzen dämpft und große ungeändert läßt. Wesentlich dafür, daß kleine Differenzen nicht im Bild stehenbleiben, sondern abgebaut werden können, ist, daß die kleinen Differenzen nur gedämpft, aber nicht zu Null gesetzt werden (Fig. 7). Auf diese Weise wird zum einen das Grundrauschen des neuen Quellbildes gedämpft und zum anderen kleine rauschartige Störungen durch Fehler in der bewegungskompensierten Prädiktion und der DCT-Codierung vermindert. Dies führt zu einer Senkung des Bitbedarfs bei der DCT-Codierung. Die DFD wird blockweise für 8*8 Pixel gebildet (Stufe DFD) und mit fallender Größe gemäß einer Tabelle (Fig. 8) sortiert. Zusätzlich wird in diese Tabelle die jeweils für die DCT-Codierung des Blocks (Block No.) erforderliche Anzahl der Bits eingetragen. Außerdem ist die Chrominanz-Signalisierung (Chrom. Flag) und die DCT-Bitzahl DCT'COSTS' eingetragen.

Alle diese Informationen werden durch die Steuerung CONTROL zu einem Übertragungssignal aufbereitet. Diese Informationen werden aus der DCT-Codierung des DFD-Bildes (Prädiktionsfehler Fig. 5) oder des Quellbildes (Fig. 4) gewonnen. Die freie Kanalbitrate wird zur Übertragung von DCT-Blöcken genutzt. Dabei werden die Blöcke mit der größten DFD übertragen, bis der Kanal ausgefüllt ist. Die Bitmaske zur Adressierung der DCT-Blöcke wird VWL codiert (Fig. 6).

Für die Prädiktion wird im Coder die inverse DCT-Transformation DCT$^{-1}$ gebildet. Ferner befinden sich hier Interpolationsfilter, die verkleinerten Bildinhalt wieder vergrößern (TP3 und TP4). Im Bildspeicher FST1 wird das rekonstruierte Bild K gespeichert. Den Daten können als Übertragungsfehlerschutz zusätzlich Informationen eines FEC-Codes (FEC = Forward error correction) beigefügt werden. Die Steuerung (Control) überwacht alle Funktionen des Codecs und schaltet es gemäß den Randbedingungen in die entsprechende Betriebsart. Die ISDN-Schnittstelle verbindet das Codec mit dem Netz. Die Auswahl der zu übertragenden Bildinformation wird durch Multiplexer MUX gesteuert, die wiederum von der Steuerung (Control) ihre Umschaltbefehle erhalten.

In Abweichung zur Realisierung gemäß Fig. 4 wird in Fig. 5 nicht das Bild K + 3 über den Multiplexer MUX zur DCT-Transformationsstufe geführt, sondern die Differenz zwischen dem Bild K + 3 und dem Schätzbild K + 3* (Stufe Σ 1). Hierdurch werden nur die Prädiktionsfehler DCT transformiert. Der 'Noise Limier' NL ist hier vor den Eingang des Multiplexers MUX geschaltet. Um für die Prädiktion wieder ein Quellbild zur Verfügung zu haben, muß die Differenzbildung nach der DCT-Rücktransformation DCT$^{-1}$ wieder rückgängig gemacht werden (Stufe Σ 2).

Im Video-Decoder (Fig. 9) - nur der Luminanzteil ist dargestellt - werden nach der ISDN-Schnittstelle die Steuerinformationen aus dem Datenstrom gewonnen (SYNC, CONTROL'). Die optionale Fehlerkorrektur EC erkennt Übertragungsfehler und korrigiert sie soweit möglich. Der Demultiplexer DEMUX trennt Verschiebungsvektoren, DCT-Koeffizienten und den Chrominanzanteil. Die Verschiebungsvektoren werden gespeichert, die Bitmasken werden decodiert. Mit Hilfe der decodierten Vektoren D′ und dem im Bildspeicher FST gespeicherten Bild K wird mit Hilfe des Extrapolators zur Bewegungskompensation MCFE1 ein bewegungskompensiertes Schätzbild K + 3* des aktuellen Bildes gebildet. Die übertragenen Bildblöcke aus dem Bild K + 3 werden einer inversen DCT-Transformation DCT$^{-1}$ unterworfen und in das Schätzbild K + 3* mittels der Summierstufe Σ 3 eingesetzt. Ein weiterer Extrapolator zur Bewegungskompensation MCFE2 extrapoliert die ausgelassenen Bilder K + 1 und K + 2 gemäß Fig. 3 bewegungskompensiert.

Nach Fig. 3 wird das Bild K + 1 aus Bild K durch Umrechnen der Vektoren, die zu Bild K geführt haben, extrapoliert. Bild K + 2 wird aus Bild K + 3 durch Umrechnen der Vektoren, die zu Bild K + 3 geführt haben, extrapoliert. Auf diese Weise wird die Originalbildfrequenz von 25 (30) Bildern/s wiederhergestellt. Das Bildsignal kann mit einem rekursiven zeitlichen Filter von kleinen Bewegungsdefekten befreit werden (nicht dargestellt).

Der Wert eines Pixels p(x,y) berechnet sich dabei nach der Formel:

$$p(x,y) = p-1(x,y) + 1/2 (p(x,y) - p-1(x,y)).$$

Schnelle Änderungen werden so auf mehrere Bilder verzögert; es entsteht ein Überblendeffekt, der sich z.B. bei Augen und Mundbewegungen, die nicht durch Vektoren beschreibbar sind, vorteilhaft auswirkt.

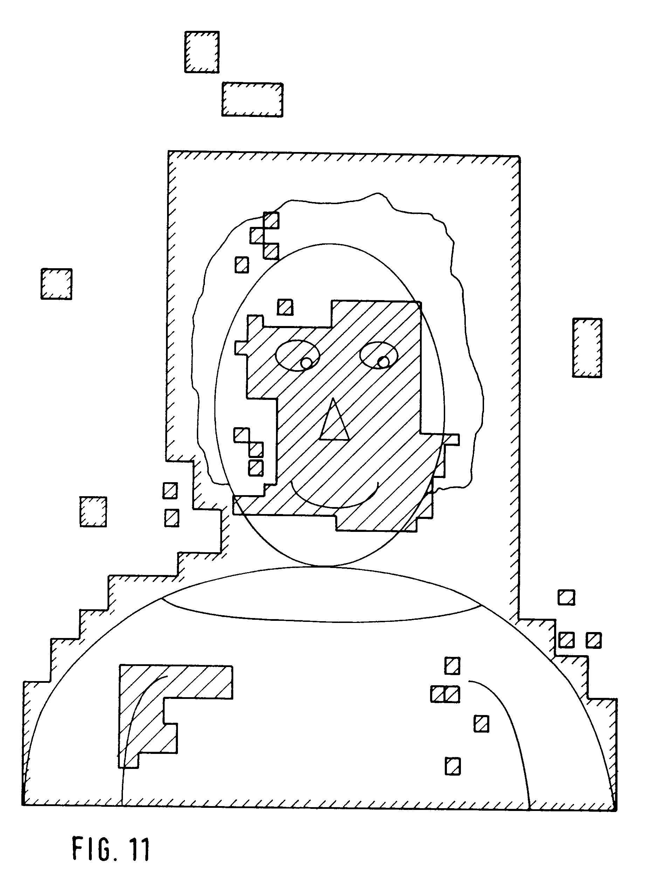

Figur 10 zeigt einen Datenrahmen für die Übertragung. Die Daten werden seriell in sieben verschiedenen Zeitschlitzen übertragen: Synchronwort (Sync.), Vektor Maske (Vector Mask.), Steuerinformation (Contr. Inform.), Vektorinformation (Vector. Inform.), Luminanz- und Chrominanz-DCT (Lum. DCT, Chrom. DCT) und Aktualisierungsinformation (Update Mask).

In Figur 11 ist die Vektormaske (Außenkonturen schraffiert) und die DCT-Maske (flächig schraffiert) für eine bewegte Bildvorlage dargestellt. Wie aus Figur 11 ersichtlich, müssen nur stark bewegte Bereiche im Gesichts- und Schulterbereich mittels DCT übertragen werden.

Für den Bewegungsschätzer ME kann ein Gradientenverfahren insbesondere gemäß EP-A-0 236 519 verwendet werden, welches mit drei Iterationsschritten auskommt. Als Startwert der Schätzung wird vom ortsgleichen Block aus dem vorhergehenden Vektorfeld ausgegangen. Nichtganzzahlige Vektoren können bilinear interpoliert werden. Ein vollständiges Bild kann durch 396 Vektoren beschrieben werden.

Als Extrapolationsfilter MCFE können die ebenfalls aus EP-A-0 236 519 bekannten FIR (finite impulse response)-Filterstrukturen benutzt werden. Eine planare Interpolation nichtganzzahliger Vektoren ist mit solchen Filtern folgendermaßen möglich:
Luminanz: 2fach-Überabtastung mit sieben Koeffizienten
Chrominanz: 4fach-Überabtastung mit elf Koeffizienten.

Für die DCT-Transformation wird wie bereits geschildert eine feste Blockgröße von 8*8 Bildpunkten verwendet. Je nach Betriebszustand verarbeitet die DCT Bildblöcke von 8*8 Bildpunkten
* in voller Auflösung (normaler Mode) nach Tabelle 1 (Figur 8) oder
* mit halber Auflösung in beiden Richtungen bei drohendem Bufferüberlauf (entspricht einem Bildausschnitt von 16*16 Punkten).
* mit einem viertel der Auflösung bei Bildaufbau und Szenenschnitt (entspricht einem Bildausschnitt von 32*32Punkten).

Für alle Betriebsarten wird der gleiche DCT-Algorithmus verwendet. Der DCT-Coder erreicht eine mittlere Datenrate von < 1 bit/Bildpunkt.

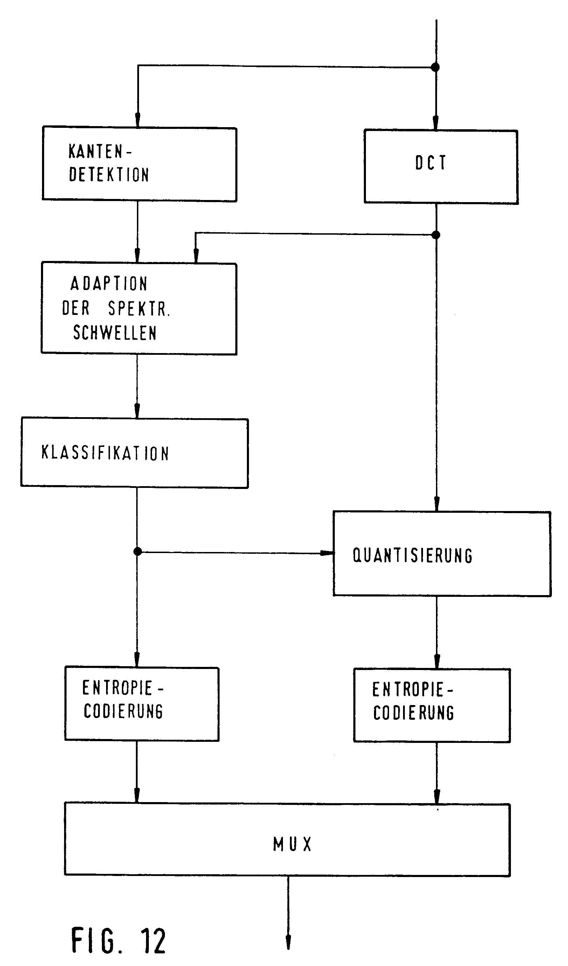

Eine zweidimensionale DCT-Transformation von 8*8 Bildpunkten wird durch zwei aufeinanderfolgende eindimensionale DCT-Transformationen von jeweils acht Bildpunkten erreicht. Für Hin- und Rücktransformation wird der gleiche Algorithmus verwendet. Eine Übersicht über die gesamte DCT-Codierung gibt Figur 12, die ausführlich in der DE 37 09 094.1 beschrieben ist. Hier nur eine Kurzerläuterung der Funktionsblöcke gemäß Figur 12:

Kantendetektion und Adaption der spektralen Schwellen

Durch die Kantendetektion wird eine lokale Adaption der spektralen Sichtbarkeitsschwellen erreicht. Werden in einem Block diagonale Kanten detektiert, so werden auch Koeffizienten berücksichtigt, die ihre Sichtbarkeitsschwelle nur zur Hälfte erreichen.

Klassifikation

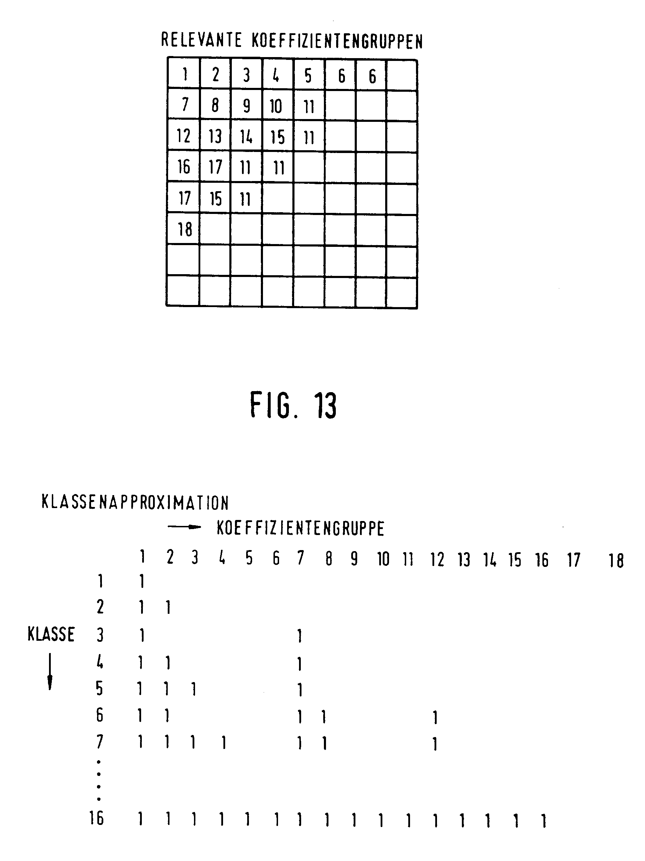

Die Koeffizienten, die die Sichtbarkeitsschwelle überschreiten, werden nach Klassen eingeteilt und übertragen (Figur 13). Die Klasse gibt an, welche Koeffizienten in welcher Reihenfolge übertragen werden (Koeffizientenadressierung). Die Klasseninformation wird als Zusatzinformation entropiecodiert übertragen.

Luminanz-Block

* Unterdrückung singulärer Koeffizienten.
* Relevante Koeffizientengruppen auswählen. Eine Koeffizientengruppe wird nur dann berücksichtigt, wenn mindestens die Hälfte ihrer Koeffizienten die Sichtbarkeitsschwelle überschreitet. Alle Koeffizienten einer relevanten Koeffizientengruppe werden übertragen (z.B. 18 Koeffizientengruppen).
* Alle relevanten Koeffizientengruppen werden zu einer Klasse zusammengefaßt, z.B. 16 Klassen (Figur 13).

6

Chrominanz-Block

Da hier nur wenige Koeffizienten übertragen werden müssen, können die Koeffizienten direkt zu Klassen zusammengefaßt werden (z.B. 8 Klassen bei max. 7 Koeffizienten).

Quantisierung

Nur die durch die Klassifikation eines Blocks ausgewählten Koeffizienten werden quantisiert. Jeder Koeffizient wird entsprechend seiner Sichtbarkeitsschwelle quantisiert. Die Wahrnehmbarkeitsschwellen für die einzelnen Koeffizienten wurden durch visuelle Tests ermittelt.

Entropiecodierung

Die gesamte Daten- und Steuerinformation ist entropiecodiert:
* Die selektierten und quantisierten AC(Wechselanteil)-Koeffizienten.
* Der Prädiktionsfehler für die DC(Gleichanteil)-Koeffizienten.
* Die Klasseninformation.
Die besonders häufigen Werte der AC- und DC-Koeffizienten sind optimal codiert, die selten vorkommenden Werte werden mit einem Präfix/Postfix-Binär-Code codiert.
Folgende Variationen des Codec sind möglich:
- Einsatz einer anderen Transformationscodierung an Stelle von DCT.
- Einsatz einer Vektorquantisierung an Stelle der DCT. Bei höheren Bitraten auch DPCM.
- Bewegungsschätzer: Es kann an Stelle eines Gradientenschätzverfahrens auch ein Blockmatching Suchverfahren angewendet weden. (z.B. Hierarchische Blockmatching Displacementschätzverfahren nach EP-A-0 236 519).
- Im Decoder kann an Stelle der Extrapolation ausgelassener Bilder eine Interpolation erfolgen.
- Die zeitliche Tiefpaßfilterung der rekonstruierten Bilder ist sowohl mit Hilfe einer FIR-Struktur als auch mittels einer IIR (infinite impulse response) möglich.

**Patentansprüche**

1. Verfahren zur senderseitigen Aufbereitung einer Bildseqeunz für die Übertragung über einen Kanal mit begrenzter Datenkapazität und deren empfangsseitige Rekonstruktion mit folgenden Maßnahmen:
   - zu einem schnellen Bildaufbau wird zuerst ein um einen Faktor planar tiefpaßgefiltertes erstes Bild mit in der Ortsauflösung reduziertem Bildinhalt übertragen,
   - danach wird Bildinhalt, der um einen niedrigeren Faktor planar tiefpaßgefiltert ist, im ersten Bild ergänzt,
   - schließlich wird ungefilterter Bildinhalt ergänzt,
   - als Maß zur Steuerung dieses dreistufigen Bildaufbaus wird jeweils der Mittelwert der Summe der Bildpunkt-zu-Bildpunkt-Differenzen (DFD) von Teilbildbereichen herangezogen, wobei die Bildpunkt-zu-Bildpunkt-Differenzen (DFD) aus den Bildpunkten eines bewegungskompensierten Teilbildbereiches des aktuellen Bildes und den entsprechenden Bildpunkten eines bewegungskompensierten Teilbildbereiches eines zeitlich davor liegenden Bildes gewonnen werden,
   - es wird der höchste Filterfaktor für die Tiefpaßfilterung gewählt, wenn der Mittelwert der Summe der Bildpunkt-zu-Bildpunkt-Differenzen (DFD) einen ersten Schwellwert (TH4) übersteigt,
   - es wird der niedrigere Filterfaktor für die Tiefpaßfilterung gewählt, wenn der Mittelwert der Summe der Bildpunkt-zuBildpunkt-Differenzen (DFD) einen zweiten in Bezug auf den ersten Schwellwert (TH4) niedrigeren Schwellwert (TH2) übersteigt.

**Claims**

1. Method of preparing, at the transmission end, an image sequence for transmission by way of a channel with limited data capacity and of reconstructing the image sequence at the reception end, comprising the following measures;
   - transmitting, for the purpose of a rapid image build-up, initially a first image which has been planar low-pass filtered by a factor and has image content reduced in local resolution,
   - thereafter image content which has been planar low-pass filtered by a lower factor is added into the first image,

EP 0 346 636 B1

- finally unfiltered image content is added,
- the respective mean value of the sum of the image point-to-image point differences (DFD) of partial image regions is drawn upon as a measure for the control of this three-stage image build-up, wherein the image point-to-image point differences (DFD) are obtained from the image points of a movement-compensated partial image region of the actual image and the corresponding image points of a movement-compensated partial image region of an image lying in front thereof in time,
- the highest filter factor for the low-pass filtering is selected if the mean value of the sum of the image point-to-image point differences (DFD) exceeds a first threshold (TIT4) and
- the lower filter factor for the low-pass filtering is selected if the mean value of the sum of the image point-to-image point differences (DFD) exceeds a second threshold value (TH2) lower in relation to the first threshold value (TH4).

**Revendications**

1. Procédé pour le traitement côté émetteur d'une séquence d'image pour la transmission par l'intermédiaire d'un canal à capacité de données limitée et reconstruction côté réception de celle-ci avec les mesures suivantes :
   - pour une constitution d'image rapide, d'abord une première image filtrée passe-bas, planaire, avec un coefficient, est transmise avec contenu d'image réduit dans la résolution locale,
   - après cela, le contenu d'image, qui est filtré passe-bas, planaire, avec un coefficient plus faible, est complété dans la première image,
   - finalement, le contenu d'image non filtré est complété,
   - comme mesure pour la commande de cette constitution d'image en trois étapes, chaque fois, la valeur moyenne de la somme des différences point d'image-à-point d'image (DFD) est extraite de zones d'image partielles, ou, les différences point d'image-à-point d'image (DFD) sont obtenues à partir des points d'image d'une zone d'image partielle, compensée en mouvement, de l'image actuelle et des points d'image correspondants d'une zone d'image partielle, compensée en mouvement, d'une image se trouvant avant cela chronologiquement,
   - il est choisi le coefficient de filtrage le plus élevé pour la filtration passe-bas, lorsque la valeur moyenne de la somme des différences point d'image-à-point d'image (DFD) excède une première valeur de seuil (TH4),
   - il est choisi le coefficient de filtrage le plus faible pour la filtration passe-bas, lorsque la valeur moyenne de la somme des différences point d'image-à-point d'image (DFD) excède une deuxième valeur de seuil (TH2) plus faible par rapport à la première valeur de seuil (TH4).

8

**FIG.1**

BILD K

ERGÄNZT

ZEIT

BILD K + 3

$\bar{D}$

ERGÄNZT

$D = (dx, dy)$
TRANSLATION

FIG. 2

BILD K

BILD K+1

ZEIT

ERGÄNZT

$+1/3 \; \overrightarrow{D_K}$

BILD K+2

AUSGELASSEN

$-1/3 \; \overrightarrow{D_{K+3}}$

BILD K+3

AUSGELASSEN

$\overrightarrow{D_{K+3}}$

$D = (dx, dy)$
TRANSLATION

FIG. 3

ERGÄNZT

FIG. 4

FIG. 5

EP 0 346 636 B1

13

FIG. 6

FIG. 7

| DFD* | BLOCK NO. | | CHROM. | DC 'COSTS' | | [BIT] |
| | LUM. | CHROM. | FLAG | LUM. | CHROM. | TOTAL |
|------|------|--------|--------|------|--------|-------|
| 1116 | 552 | 30 | 1 | 20 | 18 | 38 |
| 1020 | 432 | 24 | 1 | 39 | 32 | 71 |
| 987 | 416 | 24 | 0 | 13 | 32 | 29 |
| 878 | 336 | 20 | 1 | 15 | 28 | 43 |
| . | . | . | . | . | . | . |
| . | . | . | . | . | . | . |

$$DFD^{*} = DFD_{LUM} + DFD_{CHROM}$$

## FIG. 8

| SYNC. | VECTOR MASK | CONTR. INFORM. | VECTOR INFORM. | LUM. DCT | CHROM. DCT | UPDATE MASK |
|-------|-------------|----------------|----------------|----------|------------|-------------|

## FIG. 10

16

Y - PCM

MCFE 2

MUX

PLANAR ↓2

PLANAR ↑2

Σ 3

K + 3

K+3 *

DCT⁻¹

CHROMINANZ

MCFE1

K

FST

D'

DEMUX

D

CONTROL'

S₀

ISDN-INTF

EC

SYNC

FIG. 9

FIG. 11

FIG. 12

RELEVANTE KOEFFIZIENTENGRUPPEN

| 1 | 2 | 3 | 4 | 5 | 6 | 6 | |
|----|----|----|----|----|---|---|---|
| 7 | 8 | 9 | 10 | 11 | | | |
| 12 | 13 | 14 | 15 | 11 | | | |
| 16 | 17 | 11 | 11 | | | | |
| 17 | 15 | 11 | | | | | |
| 18 | | | | | | | |
| | | | | | | | |
| | | | | | | | |

# FIG. 13

KLASSENAPPROXIMATION

——➤ KOEFFIZIENTENGRUPPE

| | | 1 | 2 | 3 | 4 | 5 | 6 | 7 | 8 | 9 | 10 | 11 | 12 | 13 | 14 | 15 | 16 | 17 | 18 |
|-------|----|---|---|---|---|---|---|---|---|---|----|----|----|----|----|----|----|----|----|
| | 1 | 1 | | | | | | | | | | | | | | | | | |
| | 2 | 1 | 1 | | | | | | | | | | | | | | | | |
| KLASSE | 3 | 1 | | | | | | 1 | | | | | | | | | | | |
| | 4 | 1 | 1 | | | | | 1 | | | | | | | | | | | |
| | 5 | 1 | 1 | 1 | | | | 1 | | | | | | | | | | | |
| | 6 | 1 | 1 | | | | | 1 | 1 | | | | 1 | | | | | | |
| | 7 | 1 | 1 | 1 | 1 | | | 1 | 1 | | | | 1 | | | | | | |
| | ⋮ | | | | | | | | | | | | | | | | | | |
| | 16 | 1 | 1 | 1 | 1 | 1 | 1 | 1 | 1 | 1 | 1 | 1 | 1 | 1 | 1 | 1 | 1 | | |